# EUROPÄISCHE PATENTANMELDUNG

(11) **EP 2 273 383 A1**
(43) Veröffentlichungstag der Anmeldung: **12.01.2011**
(21) Anmeldenummer: 10166441.5
(22) Anmeldetag: 18.06.2010
(51) Int. Cl.: G06F 17/30

(54) **Verfahren und Vorrichtung zur automatischen Suche nach Dokumenten in einem Datenspeicher**

(30) Priorität: 06.07.2009 DE 102009031872
(71) Anmelder: Siemens Aktiengesellschaft, 80333 München (DE)
(72) Erfinder: Schambach, Marc-Peter, 78464, Konstanz (DE)

(57) **Zusammenfassung**

Die Erfindung betrifft ein Verfahren und eine Vorrichtung zur automatischen Suche nach Dokumenten in einem Datenspeicher. Eine Suchanfrage und eine im Datenspeicher abgespeicherte Menge von Dokumenten werden vorgegeben. Für jedes Dokument der Dokument-Menge wird jeweils eine rechnerauswertbare Beschreibung des Dokuments generiert. Das Dokument wird in Dokumentteile zerlegt. Für jedes Dokumentteil wird mindestens ein Ergebnis eines Entzifferns des Dokumentteils ermittelt und im Datenspeicher abgespeichert, wobei für mindestens ein Dokumentteil mehrere Entzifferungsergebnisse ermittelt und abgespeichert werden.. Hierbei wird in den Schritten des Zerlegens und Entzifferns ein Verfahren zur automatischen Zeichenerkennung angewendet. Diese Beschreibung wird im Datenspeicher abgespeichert. Eine Suchanfrage wird vorgegeben. Für jedes Dokument der Dokument-Menge wird ein Maß der Übereinstimmung zwischen dem Dokument und der Suchanfrage berechnet. Um das Übereinstimmungsmaß eines Dokuments mit der Suchanfrage zu berechnen, wird für jedes abgespeicherte mögliche Entzifferungsergebnis ein Übereinstimmungsgrad berechnet. Das Übereinstimmungsmaß des Dokuments wird durch Zusammenfassen der Übereinstimmungsgrade berechnet. Abhängig von den berechneten Übereinstimmungs-Graden wird mindestens ein Dokument der Menge ausgewählt.

## Beschreibung

Die Erfindung betrifft ein Verfahren und eine Vorrichtung zur automatischen Suche nach Dokumenten in einem Datenspeicher.

Aus Internet-Suchmaschinen ist folgendes bekannt: Ein Benutzer gibt eine Suchanfrage in ein Eingabefeld einer Suchmaschine ein und legt fest, ob nach Textdokumenten, Bildern, Videosequenzen oder ähnlichem gesucht werden soll. Die Suchmaschine präsentiert die Ergebnisse absteigend sortiert auf einem Bildschirm.

Klassischerweise werden Deskriptoren für ein Dokument in einem Datenspeicher, z. B. einem Server des Internets, vorgegeben und abgespeichert. Beispielsweise werden Deskriptoren für ein Bild oder "tags" für eine "internet site" vergeben. Diese Deskriptoren bilden eine rechnerverfügbare Beschreibung des Dokuments. Eine Suchanfrage vergleicht eine Zeichenfolge der Suchanfrage mit diesen Deskriptoren.

Dieses Verfahren hat den Nachteil, dass es korrekte Deskriptoren erfordert. Zwar sind Verfahren bekannt, um teilautomatisch Deskriptoren zu erzeugen, z. B. indem ein Verfahren der automatischen Zeichenerkennung auf ein rechnerverfügbares Dokument angewendet wird. Um korrekte Deskriptoren bereitzustellen, ist es erforderlich, die automatisch erzeugten Deskriptoren manuell zu überprüfen und zu korrigieren. Dies kann mit erheblichem Aufwand verbunden sein.

Eine Vorrichtung mit den Merkmalen des Oberbegriffs des Anspruchs 1 und ein Verfahren mit den Merkmalen des Oberbegriffs des Anspruchs 8 sind aus EP 1312039 B1 bekannt.

In EP 1312039 B1 werden ein Verfahren und eine Vorrichtung beschrieben, um in einem Bestand von rechnerverfügbaren Dokumenten zu suchen. Die rechnerverfügbaren Dokumente entstehen z. B. dadurch, dass papiergebundene Dokumente eingescannt und abgespeichert werden. Per "optical character recognition (OCR)" werden Worte des rechnerverfügbaren Dokuments entziffert. Außerdem wird jeweils eine Fehlerwahrscheinlichkeit ("probabilistic degree of error") für das Entziffern berechnet. Eine Suchanfrage mit einem Schlüsselwort ("keyword") wird vorgegeben. Falls die Abweichung zwischen dem Schlüsselwort und einem Wort eines Dokuments kleiner als die FehlerWahrscheinlichkeit ist, so wird das Dokument des Worts als Suchergebnis, das mit dem Schlüsselwort übereinstimmt ("match"), ausgegeben.

Verfahren zum Suchen in Dokumentenbeständen sind auch aus folgenden Veröffentlichungen bekannt:
EP 0764305 B1
DE 10112587 A1
US 2002/0069190 A1
US 2004/0024739 A1
US 2002/0103798 A1
US 2004/0068697 A1
WO 2008/064378 A1
US 7356461 B1
US 2007/0300190 A1
US 2007/0288442 A1
US 2006/0036566 A1
US 5855015
US 6366908 B1
US 6006221
US 5987457
US 5787424.

Der Erfindung liegt die Aufgabe zugrunde, eine Vorrichtung mit den Merkmalen des Oberbegriffs des Anspruchs 1 und ein Verfahren mit den Merkmalen des Oberbegriffs des Anspruchs 8 bereitzustellen, bei denen auch dann, wenn es nicht möglich ist, eine zweifelsfrei richtige Beschreibung des Dokuments zu erzeugen, Dokumente gefunden werden, ohne dass manuell Beschreibungen erzeugt oder automatisch erzeugte Beschreibungen manuell korrigiert werden müssen.

Die Aufgabe wird durch eine Vorrichtung mit den Merkmalen des Anspruchs 1 und ein Verfahren mit den Merkmalen des Anspruchs 8 gelöst. Vorteilhafte Ausgestaltungen sind in den Unteransprüchen angegeben.

Durch das lösungsgemäße Verfahren wird nach einem Dokument in einem Datenspeicher mit rechnerverfügbaren Dokumenten gesucht.

Eine im Datenspeicher abgespeicherte Menge von rechnerverfügbaren Dokumenten wird vorgegeben. Diese Menge kann aus allen Dokumenten oder einer exakt definierten Teilmenge aller Dokumente bestehen.

Für jedes Dokument der Dokument-Menge wird jeweils eine rechnerauswertbare Beschreibung des Dokuments generiert. Die Generierung dieser Beschreibung umfasst folgende Schritte:
- Das Dokument wird in Dokumentteile zerlegt.
- Für jedes Dokumentteil wird mindestens ein Ergebnis eines Entzifferns des Dokumentteils ermittelt und im Datenspeicher abgespeichert. Hierbei werden für mindestens ein Dokumentteil mehrere mögliche Entzifferungsergebnisse dieses Dokumentteils ermittelt und abgespeichert.
- Hierbei wird in den Schritten des Zerlegens und Entzifferns ein Verfahren zur automatischen Zeichenerkennung angewendet.

Diese Generierungs-Schritte führt eine Datenverarbeitungsanlage automatisch durch.

Diese Beschreibung wird im Datenspeicher abgespeichert, wobei eine automatisch auswertbare Verknüpfung zwischen Beschreibung und Dokument hergestellt wird.

Eine rechnerverfügbare Suchanfrage wird vorgegeben. Das lösungsgemäße Verfahren und die lösungsgemäße Vorrichtung liefern Dokumente, die zu dieser Suchanfrage passen.

Für jedes Dokument der Dokument-Menge wird ein Maß der Übereinstimmung zwischen dem Dokument und der vorgegebenen Suchanfrage berechnet. Um das Übereinstimmungsmaß eines Dokuments mit der Suchanfrage zu berechnen, werden folgende Schritte durchgeführt:
- Für jedes abgespeicherte mögliche Entzifferungsergebnis eines Dokumentteils wird ein Übereinstimmungsgrad berechnet.
- Das Übereinstimmungsmaß des Dokuments mit der Suchanfrage wird durch Zusammenfassen der Übereinstimmungsgrade berechnet. Jeder Übereinstimmungsgrad beschreibt einen Grad für die Übereinstimmung zwischen dem Dokumentteil-Entzifferungsergebnis und der vorgegebenen Suchanfrage.

Abhängig von dem Übereinstimmungsmaß und somit von den berechneten Übereinstimmungs-Graden wird mindestens ein Dokument der Menge ausgewählt. Die Menge der ausgewählten Dokumente wird als das Ergebnis der Suchanfrage verwendet.

Das lösungsgemäße Verfahren und die lösungsgemäße Vorrichtung führen die Generierung der Beschreibung, die Berechnung der Übereinstimmungsmaße und die Auswahl der Dokumente automatisch durch. Möglich, aber nicht erforderlich ist es, dass ein Benutzer nachträglich manuell die abgespeicherte Beschreibung überprüft oder ändert. Dadurch wird es möglich, auch eine umfangreiche Menge von Dokumenten für eine automatische Suche zur Verfügung zu stellen und dadurch für Suche zugänglich zu machen. Falls man für jedes dieser Dokumente manuell Schlagworte (Deskriptoren) vergeben müsste oder jedes Dokument anderweitig vollständig erfassen müsste, so würde es sehr lange dauern und einen hohen Aufwand erfordern, um die Dokumente einer Suche zugänglich zu machen.

Lösungsgemäß werden mehrere mögliche Entzifferungsergebnisse eines Dokumentteils abgespeichert und zur Suche verwendet. Die Erfindung spart die Notwendigkeit ein, eine Entscheidung für eines dieser möglichen Entzifferungsergebnisse zu treffen. Diese Entscheidung lässt sich oft nur entweder mit Unsicherheit oder mit einer manuellen Eingabe treffen, was oft unerwünscht oder zu aufwendig ist.

Die Erfindung lässt sich beispielsweise für Suchaufgaben in folgenden Archiven mit Dokumenten anwenden:
- Datenspeicher mit Patientenakten,
- Grundbuchauszüge,
- Zeitungs- und Zeitschriftenarchive,
- Aufzeichnungen einer Kamera, die an einem öffentlichen Platz aufgestellt ist, z. B. einer Straßenkreuzung oder einem Bahnhof,
- Patentregistern,
- Datenspeicher mit Dokumentar- oder Spielfilme,
- Datenspeicher mit Aufzeichnungen von Fernsehsendungen,
- Datenspeicher mit Musikstücke mit gesungenen Texten und
- Datenspeicher mit Aufzeichnungen von Reden und anderen gesprochenen Texten.

Im Ausführungsbeispiel steht ein Archiv mit vielen Dokumenten zur Verfügung. Diese Dokumente können mindestens eines der folgenden Formate aufweisen:
- papiergebundene Dokumente, z. B. Akten, Zeitungen, ...
- Audiodokumente (Tonbänder, Schallplatten, ...)
- Bilddokumente (Papierbilder) oder
- Film- und/oder Videodokumente, z. B. Analogfilme.

Diese Dokumente werden digitalisiert und dadurch rechnerverfügbar gemacht. Die Digitalisierungsergebnisse werden in einem Datenspeicher, vorzugsweise einer relationalen Datenbank, abgespeichert. Die Datenbank kann Bestandteil eines Servers sein. Der Server kann über ein Intranet oder das Internet von Arbeitsplatzrechnern aus ("clients") erreichbar sein.

Vorzugsweise wird pro Dokument ein Datensatz in einem Datenspeicher in Form einer Datenbank angelegt. Der Datensatz umfasst einen Verweis auf eine rechnerverfügbare Repräsentation des Dokuments.

Im Falle eines papiergebundenen Dokuments wird durch einen Vorgang des Scannens ein digitales Abbild des Dokuments erzeugt. Ein Audiodokument, Bilddokument, Film- oder Videodokument wird in ein jeweils geeignetes Datenformat umgewandelt, das die Abspeicherung und Wiedergabe von Tönen bzw. Bildern bzw. Bildsequenzen auf einer Datenverarbeitungsanlage ermöglicht.

In allen diesen rechnerverfügbaren Dokumenten sind Abbilder von Texten enthalten. Die Abbilder papiergebundener Dokumente zeigen in der Regel vor allem Text. In Audiodokumenten sind oft Sequenzen von gesprochener Sprache enthalten, z. B. Reden oder gesungene Texte. In Bildern oder Filmen werden Texte gezeigt, z. B. Einblendungen, Untertitel, Kennzeichnungen von dargestellten Objekten, amtliche Kennzeichen von Straßenfahrzeugen oder Kennungen von Behältern oder Fahrzeugen. Im Ausführungsbeispiel soll nach Dokumenten gesucht werden, die eine bestimmte Zeichenfolge enthalten, z. B. als gedruckten Text oder in Form von gesprochenen oder gesungenen Worten.

Im Ausführungsbeispiel zunächst wird ein Generierungsschritt durchgeführt. Ein Generierungs-Rechner erzeugt für jedes Dokument im Datenspeicher jeweils eine rechnerverfügbare Beschreibung. Möglich ist es, nur für eine zuvor ausgewählte Menge von Dokumenten jeweils eine Beschreibung zu erzeugen oder auch zunächst nur für einige Dokumente und danach für die übrigen Dokumente jeweils eine Beschreibung zu erzeugen. Im Ausführungsbeispiel arbeitet der Generierungs-Rechner vollautomatisch und hat Lese- und Schreibzugriff auf den Datenspeicher mit den rechnerverfügbaren Dokumenten aus dem Archiv.

Ein Textdokument wird vom Generierungs-Rechner per Zeichenerkennung ("optical character recognition", OCR) analysiert. Hierbei wird das gesamte Dokument oder auch ein zuvor ausgewählter Bereich in Dokumentteile zerlegt. Ein Dokumentteil kann seinerseits aus Dokumentteilen bestehen. Beispiele für Dokumentteile sind Spalten, Zeilen, Worte und Buchstaben.

Ein Bilddokument oder Filmdokument wird mit Bildverarbeitung ("pattern recognition") auf Abbilder von Textblöcken untersucht. Jedes Textblock-Abbild fungiert als ein Dokumentteil und kann seinerseits Dokumentteile umfassen.

Ein Audiodokument wird entsprechend mit Sprachverarbeitung ("speech recognition") analysiert. Dokumentteile sind z. B. einzelne Worte.

Bereits die Zerlegung eines Dokuments in Dokumentteile kann mit Unsicherheit behaftet sein. Daher liefert das Analyseverfahren Alternativen, also mehrere mögliche Zerlegungen in unterschiedliche Dokumentteile. Im Ausführungsbeispiel ist jede dieser Alternativen mit jeweils einen Zerlegungs-Sicherheitsmaß versehen.

Die Dokumentteile werden entziffert. Im Falle eines Sprachdokuments bedeutet "Entziffern" das Erkennen von gesprochener Sprache per OCR. Das eingesetzt Verfahren zur Zeichenerkennung bzw. Bildauswertung bzw. Sprachverarbeitung vermag oft einen Dokumentteil nicht eindeutig zu entziffern, sondern liefert mehrere alternative mögliche Entzifferungsergebnisse. Das Entziffern eines Dokumentteils ist somit mit Unsicherheit behaftet, so dass das Verfahren mehrere mögliche Entzifferungsergebnisse liefert. Diese Entzifferungsergebnisse sind wiederum mit Unsicherheit behaftet. Für jedes Dokumentteil wird ein Entzifferungs-Sicherheitsmaß berechnet. Dieses Entzifferungs-Sicherheitsmaß ist ein Maß dafür, wie sicher das mögliche Entzifferungsergebnis mit dem Dokumentteil übereinstimmt.

Zwar ist es möglich, die Mehrdeutigkeiten beim Zerlegen und Entziffern aufzulösen, indem mehrere Kandidaten einem Benutzer zur Auswahl präsentiert werden und der Benutzer die richtige Alternative auswählt und eine entsprechende Eingabe in ein Datenerfassungsgerät vornimmt. Ein solches Verfahren ist im Gebiet der Postautomation als "Videocodieren" bekannt und wird benutzt, um Adressangaben auf Postsendungen zu entziffern. Jedoch wäre dies im Ausführungsbeispiel viel zu zeitaufwendig und teuer und wird daher nicht durchgeführt.

Vielmehr wird für jedes Dokumentteil jedes mögliche Entzifferungsergebnis mit dem jeweiligen Entzifferungs-Sicherheitsmaß abgespeichert. Der Generierungs-Rechner hat Schreibzugriff auf den Datenspeicher und ordnet jedem Dokument im Datenspeicher die Zerlegung, die Zerlegungs-Sicherheitsmaße, die möglichen Entzifferungsergebnisse und die Entzifferungs-Sicherheitsmaße zu.

Vorzugsweise umfasst eine Registrierungs-Datenbank für jedes rechnerverfügbare Dokument im Datenspeicher jeweils einen Datensatz. Dieser Datensatz enthält einen Verweis auf das Dokument und vorzugsweise eine Beschreibung der Zerlegung in Dokumentteile, die Zerlegungs-Sicherheitsmaße, die möglichen Entzifferungsergebnisse und die Entzifferungs-Sicherheitsmaße.

Die Ergebnisse, die beim Entziffern der Dokumentteile eines Dokuments generiert werden, werden bevorzugt als ein Graph oder eine Menge von Graphen repräsentiert. Beispielsweise wird jede Zeile eines Dokuments durch einen Graphen repräsentiert. Jeder Knoten eines solchen Graphen repräsentiert eine Alternative für die Entzifferung eines Dokumentteils. Jede Kante repräsentiert eine mögliche alternative Zerlegung des Dokuments.

Die Nachfolge-Knoten eines Knotens, der für ein mögliches Entzifferungs-Ergebnis eines Dokumentteils steht, sind die in Betracht kommenden Alternativen für die Entzifferung des im Dokument nachfolgenden Dokumentteils. Jeder Pfad durch einen solchen Graphen ist ein mögliches Entzifferungsergebnis für den repräsentierten Bestandteil des Dokuments, z. B. für eine Zeile eines Textdokuments. Die Entzifferungs-Sicherheitsmaße für die möglichen Entzifferungsergebnisse werden zusätzlich in diesem Graphen abgespeichert.

Diese Graphen werden vollautomatisch generiert und als Beschreibung des Dokuments abgespeichert. Diese "unscharfe Beschreibung" erfordert ca. 10 bis 100 Mal mehr Speicherplatz als herkömmliche Entzifferungsergebnisse ohne Unschärfe. Dafür ist keine manuelle Überprüfung und Korrektur erforderlich. Dieses ist vor allem deshalb ein Vorteil, weil Datenspeicher immer größere Speicherkapazitäten aufweisen, hingegen eine manuelle Korrektur teuer bleibt.

Mindestens einmal wird eine textliche Suchanfrage vorgegeben. Automatisch wird nach denjenigen Dokumenten im Datenspeicher gesucht, die zu einer vorgegebenen Suchanfrage passen. Im Ausführungsbeispiel erfasst jeweils ein Arbeitsplatzrechner ("client") diese Suchanfrage und leitet sie an den Server mit dem Datenspeicher weiter. Der Server wertet die Suchanfrage aus und übermittelt die Antwort an den anfragenden Arbeitsplatzrechner. Dieser Arbeitsplatzrechner stellt das Ergebnis auf einem Bildschirmgerät dar.

In einer Ausgestaltung besteht die Suchanfrage aus einer Zeichenfolge. Ein Benutzer tippt die Zeichenfolge in ein Erfassungsgerät des Arbeitsplatzrechners ein oder gibt sie per Spracheingabe ein. Die Zeichenfolge kann Platzhalter ("wild cards") umfassen, allgemeiner: einen regulären Ausdruck ("regular expression"). Möglich ist auch, ein rechnerverfügbares Abbild eines Texts vorzugeben, z. B. eine eingescannte Unterschrift oder ein Ausschnitt aus einem Dokument, welcher eine Zeichenfolge zeigt. Auch dieses Text-Abbild wird per Zeichenerkennung entziffert, und das Entzifferungsergebnis wird als Graph repräsentiert. Dieser Graph fungiert dann als Suchanfrage.

Die Suchanfrage wird um die Suchanfrage auszuwerten, mit demjenigen Graph oder denjenigen Graphen jedes Dokuments derjenigen Dokument-Menge verglichen, in der gesucht werden soll. Möglich ist, dass diese Dokument-Menge alle Dokumente umfasst, die im Datenspeicher abgespeichert sind. Möglich ist auch, vorab die Suche auf eine Teilmenge der abgespeicherten Dokumente einzuschränken, z. B. alle Dokumente aus einem bestimmten Zeitraum oder zu einem bestimmten Sachgebiet, wobei diese Auswahl eine "scharfe Auswahl" ohne Alternativen ist.

Der Vergleich der Suchanfrage mit einem Teil, der als ein Knoten oder ein Teilpfad des Graphen repräsentiert ist, liefert einen Übereinstimmungsgrad. Bei der Berechnung eines Übereinstimmungsgrads werden die Definition eines Abstands sowie die Zerlegungs-Sicherheitsmaße und Entzifferungs-Sicherheitsmaße verwendet. Dieser Übereinstimmungsgrad ist ein Maß für die Übereinstimmung eines möglichen Entzifferungsergebnisses des Dokumentteils mit der vorgegebenen Suchanfrage. Wie bereits dargelegt, ist es möglich, mehrere alternative mögliche Entzifferungsergebnisse abzuspeichern. In diesem Fall werden auch mehrere unterschiedliche Übereinstimmungsgrade berechnet, nämlich je ein Übereinstimmungsgrad pro möglichem Entzifferungsergebnis des Dokumentteils. Die verschiedenen Übereinstimmungsgrade für die möglichen Entzifferungsergebnisse eines Dokumentteils werden in einer Ausgestaltung zu einem einzigen Übereinstimmungsgrad zwischen dem Dokumentteil und der Suchanfrage zusammengefasst.

Die einzelnen Übereinstimmungsgrade werden zu mindestens einem Übereinstimmungsmaß zwischen der Suchanfrage und dem Dokument zusammengefasst. Hierfür wird eine Aggregierungsvorschrift angewendet. Beispielsweise wird als Übereinstimmungsmaß der maximale Übereinstimmungsgrad eines Dokumentteils mit der Suchanfrage verwendet.

Eine Information über die am höchsten bewerteten Dokumente wird auf einem Bildschirmgerät des anfragenden Arbeitsplatzrechners ausgegeben. Beispielsweise wird von den N am höchsten bewerteten Dokumente je ein Ausschnitt aus demjenigen Abbild, das auch für die automatische Zeichenerkennung verwendet wurde, angezeigt, wobei N eine vorgegebene Zahl ist. Oder diejenigen Dokumente werden ausgegeben, deren Übereinstimmungsmaß mit der Suchanfrage eine vorgegebene Schranke übersteigt. In diesem Ausschnitt kann bereits angezeigt sein, wo im Abbild die zur Suchanfrage passende Textfolge auftritt. Somit werden dem Benutzer Dokumente angezeigt, die zu seiner Suchanfrage passen.

Vorzugsweise werden die automatisch gefundenen Dokumente absteigend nach Übereinstimmungsmaß ausgegeben.

In einer Ausgestaltung wird zusätzlich ein "Kontext" verwendet. Ein Kontext kann z. B. sein:
- eine rechnerverfügbare Repräsentation einer Grammatik einer natürlichen Sprache, z. B. in Form von Ableitungsregeln oder eines finiten Automaten,
- ein rechnerverfügbares Wörterbuch einer natürlichen Sprache,
- ein rechnerverfügbares Wörterbuch eines Fachgebiets,
- eine rechnerverfügbare Beschreibung eines Schemas für den Aufbau von Dokumenten im Datenspeicher.

Das Schema zeigt an, wo sich welche Informationen im Dokument, z. B. auf einem Grundbuchauszug, befinden. Das Schema ("template") kann auch ein Formular beschreiben.

Möglich ist, einen Kontext bereits dann vorzugeben, wenn die Beschreibungen der Dokumente so wie oben beschrieben generiert werden. Der Kontext schließt einige Alternativen bei der Entzifferung von Dokumentteilen aus, weil diese möglichen Alternativen in dem Kontext nicht vorkommen. Oder der Kontext führt zu veränderten Sicherheitsmaßen.

Die Vorgabe eines Kontextes führt dazu, dass eine kontextabhängige Beschreibung des Dokuments generiert wird. Diese kontextabhängige Beschreibung hat vorzugsweise ebenfalls die Form eines Graphen, der so wie oben beschrieben aufgebaut ist. Vorzugsweise wird die ursprüngliche, also kontextunabhängige Beschreibung des Dokuments beibehalten, also die ursprüngliche Beschreibung und die kontextabhängige Beschreibung werden beide im Datenspeicher abgespeichert. Möglich ist, mehrere Kontexte vorzugeben und pro Kontext jeweils eine kontextabhängige Beschreibung zu generieren und abzuspeichern.

In einer anderen Ausgestaltung wird zusätzlich zur Suchanfrage ein Kontext vorgegeben. Als Reaktion auf die Suchanfrage werden kontextabhängige Graphen für die Dokumente generiert. Diese Ausgestaltung bewirkt allerdings, dass die Antwort auf die Suchanfrage erst nach längerer Zeit generiert wird.

## Patentansprüche

1. Verfahren zum Suchen nach einem Dokument in einem Datenspeicher mit rechnerverfügbaren Dokumenten,
wobei
- eine Suchanfrage und
- eine im Datenspeicher abgespeicherte Menge von Dokumenten
vorgegeben werden und
das Verfahren die automatisch durchgeführten Schritte umfasst, dass
- für jedes Dokument der Dokument-Menge jeweils eine rechnerauswertbare Beschreibung des Dokuments generiert und im Datenspeicher abgespeichert wird,
- für jedes Dokument der Dokument-Menge jeweils ein Maß der Übereinstimmung zwischen dem Dokument und der vorgegebenen Suchanfrage berechnet wird und
- abhängig von den berechneten Übereinstimmungs-Graden mindestens ein Dokument der Menge ausgewählt wird,
für jedes Dokument im Datenspeicher die Generierung der Beschreibung die Schritte umfasst, dass
- das Dokument in Dokumentteile zerlegt wird und
- für jedes Dokumentteil mindestens ein Ergebnis eines Entzifferns des Dokumentteils ermittelt und im Datenspeicher abgespeichert wird,
wobei
- in den Schritten des Zerlegens und Entzifferns ein Verfahren zur automatischen Zeichenerkennung angewendet wird und
- für das jeweils mindestens eine Entzifferungsergebnis jedes Dokumentteils jeweils ein Sicherheitsmaß berechnet wird,
wobei das Sicherheitsmaß ein Maß dafür ist, wie sicher das mögliche Entzifferungsergebnis mit dem Dokumentteil übereinstimmt,
**dadurch gekennzeichnet, dass**
für mindestens ein Dokumentteil mehrere mögliche Ergebnisse des Entzifferns des Dokumentteils ermittelt und abgespeichert werden,
für jedes mögliche Entzifferungsergebnis jedes Dokumentteils jeweils ein Sicherheitsmaß berechnet wird
die Berechnung des Übereinstimmungsmaßes eines Dokuments mit der Suchanfrage die Schritte umfasst, dass
- für jedes abgespeicherte mögliche Entzifferungsergebnis ein Übereinstimmungsgrad zwischen dem Entzifferungsergebnis und der Suchanfrage berechnet wird,
- wobei die Sicherheitsmaße bei der Berechnung der Übereinstimmungsgrade verwendet werden, und
- das Übereinstimmungsmaß des Dokuments durch Zusammenfassen der Übereinstimmungsgrade berechnet wird.

2. Verfahren nach Anspruch 1,
**dadurch gekennzeichnet, dass**
eine rechnerverfügbare Beschreibung eines Kontextes vorgegeben wird, aus dem mindestens ein Dokument der Dokumenten-Menge im Datenspeicher stammt, und
für jedes Dokument der Menge zusätzlich eine kontextabhängige Beschreibung des Dokuments generiert und abgespeichert wird,
wobei für jedes Dokumentteil jeweils mindestens ein mit dem Kontext vereinbares mögliches kontextabhängiges Entzifferungsergebnis ermittelt und abgespeichert wird

3. Verfahren nach Anspruch 2,
**dadurch gekennzeichnet, dass**
im Datenspeicher
- sowohl die Beschreibung
- als auch die mindestens eine kontextabhängige Beschreibung
abgespeichert werden.

4. Verfahren nach Anspruch 2 oder Anspruch 3,
**dadurch gekennzeichnet, dass**
der rechnerverfügbare Kontext mindestens eines der folgenden Objekte umfasst:
- eine rechnerverfügbare Repräsentation einer Grammatik einer natürlichen Sprache,
- ein rechnerverfügbares Wörterbuch einer natürlichen Sprache,
- ein rechnerverfügbares Wörterbuch eines Fachgebiets,
- eine rechnerverfügbare Beschreibung eines Schemas für den Aufbau von Dokumenten im Datenspeicher.

5. Verfahren nach einem der Ansprüche 2 bis 4,
**dadurch gekennzeichnet, dass**
ein Kontext für die Suchanfrage vorgegeben wird und
dann, wenn für diesen Kontext
- eine rechnerverfügbare Kontext-Beschreibung
- sowie für jedes Dokument der Dokument-Menge eine kontextabhängige Beschreibung für diesen Kontext im Datenspeicher abgespeichert sind,
die kontextabhängigen Beschreibungen der Dokumente als Dokument-Beschreibungen verwendet werden.

6. Verfahren nach einem der Ansprüche 1 bis 5,
**dadurch gekennzeichnet, dass**
- für jedes automatisch ausgewählte Dokument ein Ausschnitt des Dokuments erzeugt wird,
- die erzeugten Ausschnitte der ausgewählten Dokumente auf einem Bildschirmgerät zur Auswahl angezeigt werden,
- erfasst wird, welcher der angezeigten Ausschnitte ausgewählt wurde, und
- das Dokument, von dem der ausgewählte Ausschnitt stammt, auf dem Bildschirmgerät angezeigt wird.

7. Verfahren nach einem der Ansprüche 1 bis 6,
**dadurch gekennzeichnet, dass**
- mindestens einmal für mindestens ein Dokumentteil eines Dokuments der Dokument-Menge die abgespeicherten möglichen Erkennungsergebnisse auf einem Bildschirmgerät zur Auswahl angezeigt werden,
- erfasst wird, welches der angezeigten Erkennungsergebnisse ausgewählt wurden, und
- aus der Beschreibung des Dokuments die nicht ausgewählten möglichen Erkennungsergebnisse entfernt werden oder
- in die Beschreibung des Dokuments die ausgewählten möglichen Erkennungsergebnisse mit erhöhtem Übereinstimmungsgrad eingefügt werden.

8. Such-Vorrichtung zum Suchen nach einem Dokument in einem Datenspeicher, wobei
im Datenspeicher eine Menge von rechnerverfügbaren Dokumenten abgespeichert ist und
die Vorrichtung
- eine Schnittstellen-Einrichtung,
- eine Beschreibungs-Generierungs-Einrichtung,
- eine Suchanfragen-Erfassungs-Einrichtung und
- eine Dokumenten-Auswahl-Einrichtung
umfasst,
die Schnittstellen-Einrichtung dazu ausgestaltet ist, Lesezugriff und Schreibzugriff der Such-Vorrichtung auf den Datenspeicher herzustellen,
die Beschreibungs-Generierungs-Einrichtung dazu ausgestaltet ist, automatisch für jedes Dokument der Dokument-Menge jeweils eine rechnerauswertbare Beschreibung des Dokuments zu generieren und eine Abspeicherung dieser Beschreibung im Datenspeicher auszulösen,
die Suchanfragen-Erfassungs-Einrichtung dazu ausgestaltet ist, eine Suchanfrage zu erfassen,
die Dokumenten-Auswahl-Einrichtung dazu ausgestaltet ist, automatisch
- für jedes Dokument der Dokument-Menge jeweils ein Maß der Übereinstimmung zwischen dem Dokument und einer erfassten Suchanfrage zu berechnen und
- abhängig von den berechneten Übereinstimmungs-Graden mindestens ein Dokument der Menge auszuwählen,
die Beschreibungs-Generierungs-Einrichtung dazu ausgestaltet ist, bei der Generierung der Beschreibung eines Dokuments die Schritte auszuführen,
- das Dokument in Dokumentteile zu zerlegen und
- für jedes Dokumentteil mindestens ein Ergebnis eines Entzifferns des Dokumentteils zu ermitteln und im Datenspeicher abzuspeichern,
wobei die Beschreibungs-Generierungs-Einrichtung dazu ausgestaltet ist,
- in den Schritten des Zerlegens und Entzifferns ein Verfahren zur automatischen Zeichenerkennung anzuwenden,
- für das jeweils mindestens eine Entzifferungsergebnis jedes Dokumentteils jeweils ein Sicherheitsmaß zu berechnen,
wobei das Sicherheitsmaß ein Maß dafür ist, wie sicher das mögliche Entzifferungsergebnis mit dem Dokumentteil übereinstimmt,
**dadurch gekennzeichnet, dass**
die Beschreibungs-Generierungs-Einrichtung dazu ausgestaltet ist,
- für einen Dokumentteil mehrere mögliche Ergebnisse des Entzifferns des Dokumentteils zu ermitteln und abzuspeichern und
- für jedes mögliche Entzifferungsergebnis jedes Dokumentteils jeweils ein Sicherheitsmaß zu berechnen und abzuspeichern,
die Dokumenten-Auswahl-Einrichtung dazu ausgestaltet ist, bei Berechnung des Übereinstimmungsmaßes eines Dokuments mit der erfassten Suchanfrage die Schritte auszuführen,
- für jedes abgespeicherte mögliche Entzifferungsergebnis ein Übereinstimmungsgrad zu berechnen und
- das Übereinstimmungsmaß des Dokuments durch Zusammenfassen der Übereinstimmungsgrade zu berechnen.

9. Such-Vorrichtung nach Anspruch 8,
**dadurch gekennzeichnet, dass**
die Such-Vorrichtung einen Kontext-Datenspeicher umfasst, im Kontext-Datenspeicher eine rechnerverfügbare Beschreibung eines Kontextes, aus dem mindestens ein Dokument im Datenspeicher stammt, abgespeichert ist,
die Beschreibungs-Generierungs-Einrichtung dazu ausgestaltet ist, für jedes Dokument der Menge zusätzlich eine kontextabhängige Beschreibung des Dokuments zu generieren und eine Abspeicherung dieser Beschreibung im Datenspeicher auszulösen,
wobei die Beschreibungs-Generierungs-Einrichtung für jedes Dokumentteil jeweils mindestens ein mit dem Kontext vereinbares mögliches kontextabhängiges Entzifferungsergebnis ermittelt und dessen Abspeicherung auslöst.
